# EUROPEAN PATENT APPLICATION

(11) **EP 3 069 823 A1**
(43) Date of publication of application: **21.09.2016**
(21) Application number: 15159984.2
(22) Date of filing: 20.03.2015
(51) Int. Cl.: B24D 18/00, B24D 99/00

(54) **METHOD FOR PRODUCING A SEGMENT FOR A DIAMOND TOOL AND SEGMENT FOR A DIAMOND TOOL**

(71) Applicant: Hou, Jiaxiang, Fujian 361012 (CN)
(72) Inventor: Hou, Jiaxiang, Fujian 361012 (CN)
(74) Representative: DREISS Patentanwälte PartG mbB

(57) **Abstract**

A method for producing a segment (11) for a diamond tool with regard to providing a simple, cost-effective and environmentally friendly production of diamond tools is configured and modified by the following steps: providing at least two solid elements (10), putting artificial diamonds (26) onto a surface of each of the at least two solid elements (10), assembling the solid elements (10) into a mould with the solid elements (10) being stacked on each other and using a hot pressing machine to hot press the solid elements (10) in order to form one diamond segment (11).

A segment (11) for a diamond tool is specified.

## Description

The present invention relates to a method for producing a segment for a diamond tool. Furthermore, the present invention also relates to a segment for a diamond tool.

In today's diamond tools industry diamond tools or parts thereof are manufactured by mixing artificial diamonds with metal powders and using a graphite mould as a container for this powder mixing to manufacture different sizes of alloyed segments under high pressure and high temperature conditions. Thus, the diamond tools or parts thereof are manufactured by primary forming. This allows a production of a segment for a diamond tool in different sizes and in different composition, depending on the metal powder and the diamonds used.

However, the amount of time and energy necessary for producing diamond tools in this manner is significantly high. In addition to high production costs this also leads to high environment pollution. Furthermore, uniform and consistent quality cannot always be achieved due to irregularities in the arrangement of the powder or in the forming process.

It is therefore an object of the present invention to provide a simple, cost-effective and environmentally friendly production of diamond tools segments.

The aforementioned object is achieved with a method for producing a segment for a diamond tool according to claim 1. The method is characterized by providing at least two solid elements, putting artificial diamonds onto a surface of each of the at least two solid elements, assembling the solid elements into a mould with the solid elements being stacked on each other and using a hot pressing machine to hot press the solid elements in order to form one diamond segment.

With the method according to the invention the production process of a segment for a diamond tool is optimized in many aspects. The segment is made from at least two solid elements and artificial diamonds. The solid elements act as a bond or as an embedding medium for the artificial diamonds. The artificial diamonds are positioned on a surface, especially on a top surface, of each solid element. The respective surface can for example be covered with artificial diamonds. Metal elements, i.e. metal pieces are used as solid elements.

The solid elements or metal pieces are in particular from a non-powder material and/or a non-powder metal piece.

The segments and/or solid elements are out of a non-sintered metal not manufactured by a sintering process.

The at least two solid elements with the artificial diamonds positioned thereon are stacked on each other. The actual number of the solid elements being stacked on each other depends on the thickness of the segment to be produced. Thus, also three or more solid elements can be stacked on each other in order to achieve the desired segment thickness.

With the necessary number of solid elements and the diamonds positioned thereon being stacked on each other, the approximate form or shape of the segment to be produced has already been reached. The solid elements are further processed by hot pressing them by using a hot pressing machine in order to form one segment. Thus, the segment is produced by a forming or reshaping process and not by primary shaping. The so-produced segment can also be called a diamond segment.

The method according to the invention has a lot of advantages: Due to the fact that the solid elements are not in powder form so that for the production of the segment no metal powder is needed, the problem of high metal powder pollution during the diamond tool production process is solved. Additionally, since a production of metal powder is not required, energy and resources can be saved. Besides, due to the forming or reshaping process used, the time used for the production process and man-hours can be essentially reduced, namely by about 50 percent. Therefore, also the costs can be reduced significantly, so that only about 3 to 10 percent of the costs for using metal powder during the production process arise when using the method according to the invention. Due to the segment structure with artificial diamonds embedded in the solid elements, a simplified and more uniform segment bond formula design can be achieved. Because of the optimized segment structure better cutting results, namely better cutting quality can be achieved.

In the context of the present invention, the term "segment" is meant to be a cutting element disposed on a diamond tool, for example on a saw blade, a drill or a milling tool. During processing of workpieces the cutting element of the tool comes into contact with a workpiece to be processed, thereby machining or shape cutting the workpiece. The segment or cutting element usually is disposed in the front area of a tool.

The shape and size of the solid elements and also of the segment depend on the purpose and the kind of tool for which the segment is produced. For example the segment for a milling tool and the segment for a saw blade have to fulfil various requirements. Thus, a solid element can have a cross section of at least 5 millimetres to 5 millimetres (mm) and a thickness of no more than 2 millimetres. For example cross sections of a solid element can for example be 40 mm to 12 mm, 40 mm to 15 mm, 40 mm to 18 mm or 24 mm to 12 mm, etc. The solid element or metal piece thickness can particularly be 0.5 millimetres to 1.5 millimetres.

For special milling or cutting tools also solid elements of different sizes can be stacked on each other and hot pressed in the hot pressing machine. In this case the segment comprises different sections having different cross sections.

The parameters for hot pressing the stacked solid elements in the hot pressing machine depend on the material of the solid elements. However, the minimum temperature is 100° Celsius and the minimum pressure is 10 kilo Newton, i.e. 10.000 Newton.

As artificial diamonds for example diamonds of the General Electric Company can be used. The artificial diamonds is currently one of the hardest materials in the world and is able to cut other hard materials. It is formed by a carbon molecular chain. The size range of the artificial diamonds can be 0.2 millimetres to 0.6 millimetres.

Preferably, the solid elements can be cut from at least one block of solid material into an individual solid element. An appropriate solid material is chosen and the solid elements are cut out from this solid material according to the solid element sizes actually needed. Thus, the solid elements can be cut out from a large sheet of solid material, for example a large sheet of metal. Accordingly, a flexible production can be achieved. The cutting can be done by using a laser cutter, a water jet cutter, a sawing machine or a punching machine.

Preferably, the solid elements have a board-like or prismatic shape. In other words, the solid elements can have the shape of a plate. Particularly, the solid elements can have the shape of an even cuboid, for example when segments are determined to being used on a diamond saw plate. The solid elements also can have a curved cuboid shape, for example when determined to being used on a diamond milling tool.

Conveniently, the solid elements and/or the blocks of solid material consist of copper, aluminium, nickel or steel. So by using one of these materials the segment can be adjusted to the later purpose. In other words, the segment can be adjusted to the material to be processed by the diamond tool with the segment being a part thereof.

Advantageously, holes or recesses for holding the diamonds are being formed on the solid elements. This can particularly be done before putting artificial diamonds thereon. The holes or recesses hold the artificial diamonds in position in or on the solid element. As the holes or recesses can be formed in a special pattern, also the diamonds are arranged in a special pattern adjusted to the purpose of the diamond tool. In case of recesses, the diamonds positioned in the recesses are positioned on the solid element. In case of holes the diamonds are arranged mostly within the solid elements. With the help of the recesses or holes the diamonds can be kept in place during further processing of the solid elements. Thus, the artificial diamonds are reliably kept in order to contribute to a consistent segment quality.

Advantageously, the holes or recesses are being formed by a punching machine having a first member for carrying at least one solid element and a second member comprising punches for forming the holes or recesses on the solid element. Thus, the holes or recesses can be produced with simple constructional means and within a short period of time. Additionally, consistent quality can be achieved.

Conveniently, the diamonds not positioned in the holes or recesses of the solid elements can be swept away. This contributes to uniform and consistent arrangement of the diamonds according to the pattern of the holes or recesses. A consistent diamond segment quality can be achieved.

Preferably, for keeping the embedded diamonds in position, a cold pressing machine can be used to embed diamonds firmly in the recesses or holes of the solid element. This can particularly be done before assembling the solid elements into the mould. Consequently, it can be assured that the diamonds are kept in position in the solid element during stacking the solid elements on each other and assembling them into a mould. Furthermore, the process of stacking the solid elements is simplified, as the artificial diamonds have been forced into the solid elements.

The above-mentioned object is also achieved by a segment for a diamond tool or a diamond tool segment according to the coordinate main claim. This segment is characterized in that it is made from at least two solid elements and artificial diamonds embedded therein, wherein the solid elements act as a bond for the embedded diamonds. With regard to the inventive step as well as the advantages to be achieved with this segment, reference is made to the comments on claim 1, which also apply to the present segment. Metal pieces or metal plates can be used as solid elements.

Preferably, the solid elements have a board-like or prismatic shape. In other words, the solid elements can have the shape of a plate, for example a metal plate. As already explained above, the solid elements can have the shape of an even cuboid or a curved cuboid shape, depending on the tool on which the solid element and the segment is going to be used.

Preferably, the solid elements can consist of copper, aluminium, nickel or steel. As already explained above, by selecting one of these materials for the solid element the segment or diamond segment properties can be adjusted according to the diamond tool on which the segment is going to be used.

Conveniently, the solid elements have a cross section of at least 5 millimetres to 5 millimetres and thickness of at no more than 2 millimetres. Due to this size, an appropriate stability of the solid element can be achieved. As already explained above, the size and shape of the solid elements can be adjusted according to the diamond tool on which the diamond segment is going to be used. For example cross sections of a solid element can for example be 40 mm to 12 mm, 40 mm to 15 mm, 40 mm to 18 mm or 24 mm to 12 mm, etc. The solid element or metal piece thickness can particularly be 0.5 millimetres to 1.5 millimetres.

Advantageously, the solid elements together with the artificial diamonds are hot pressed by using a hot pressing machine. Thereby, the solid elements and the artificial diamonds are baked together thereby forming a diamond segment. In order to avoid repetition, reference is made to the comments on inventive step and advantages to be achieved when the solid elements together with the artificial diamonds are hot pressed, as explained above in the context of claim 1.

The invention is explained in more detail below with reference to the figures. The figures are showing:
- Figure 1: in a schematic view two steps of an embodiment of the method for producing a segment for a diamond tool according to the invention,
- figure 2: in a schematic view two further steps of an embodiment of the method for producing a segment for a diamond tool according to the invention,
- figure 3: in a schematic view a finished diamond segment with embedded artificial diamonds,
- figure 4: process parameters for hot pressing the solid elements in a hot pressing machine with the solid elements being from a first material,
- figure 5: process parameters for hot pressing the solid elements in a hot pressing machine with the solid elements being from a second material, and
- figure 6: process parameters for hot pressing the solid elements in a hot pressing machine with the solid elements being from a third material.

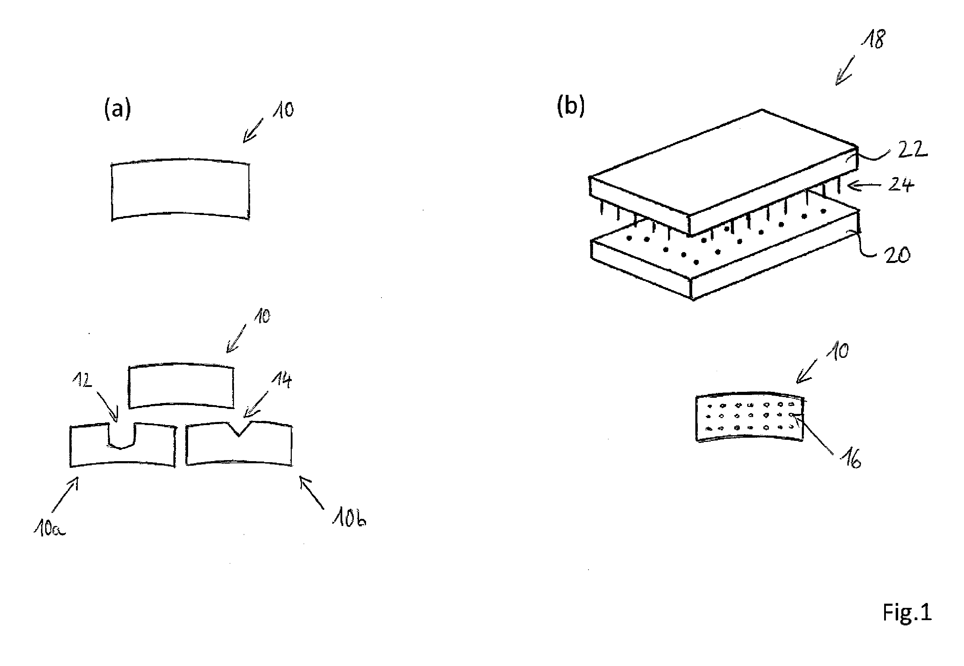

Figure 1 shows two steps (a) and (b) of the method for producing a segment for a diamond tool. In step (a) a solid element 10, namely a metal piece is provided. This solid element is cut out from at least one block of solid material (not shown). The solid element 10 has a board-like shape and can therefore also be called a solid element board. The solid element or solid element board can consist of copper, aluminium, nickel or steel.

Below the solid element 10 further solid elements 10a and 10b are shown. Solid element 10a has a slot or passage 12 with a rounded base. The slot or passage 12 serves for cooling or transporting shaving material of the segment to be produced when in use by processing a work piece. Thus, the cross section of the solid element 10a can be used on a drilling or milling diamond tool.

The solid element 10b has a slot or passage 14 with a pointedly base. Also here the slot or passage serves for cooling or transporting shaving material on the segment to be produced when in use and in contact with the work piece to be processed. For example such a cross section of the solid element 10b can be used on a diamond saw plate, for example a diamond wall saw plate.

In step (b) the forming of holes or recesses on the solid elements 10 is shown. The holes or recesses 16 in the solid elements are used for holding the diamonds in position in or on the solid element 10. This step can particularly be performed before putting artificial diamonds on the solid elements or the solid element boards.

The holes or recesses 16 are being formed by a punching machine 18. The punching machine 18 has a first member 20 for carrying at least one solid element 10. Furthermore, the punching machine 18 has a second member 22 comprising punches 24 for forming the holes or recesses 16 on the solid element 10. The punching machine 18 can for example be a six tons punching machine. The first member 20 for carrying the solid element 10 is an underside mould. The second member 22 comprising punches 24 is an upside mould. The size of the punching machine 18 and the members 20, 22 depends on the size of the solid element 10 and is adjusted to accommodate the solid element 10. With the help of the punching machine 18 the holes or recesses 16 can be formed in a consistent quality and in a short period of time. After punching, the solid element 10 comprises a pattern of holes or recesses 16 for holding artificial diamonds.

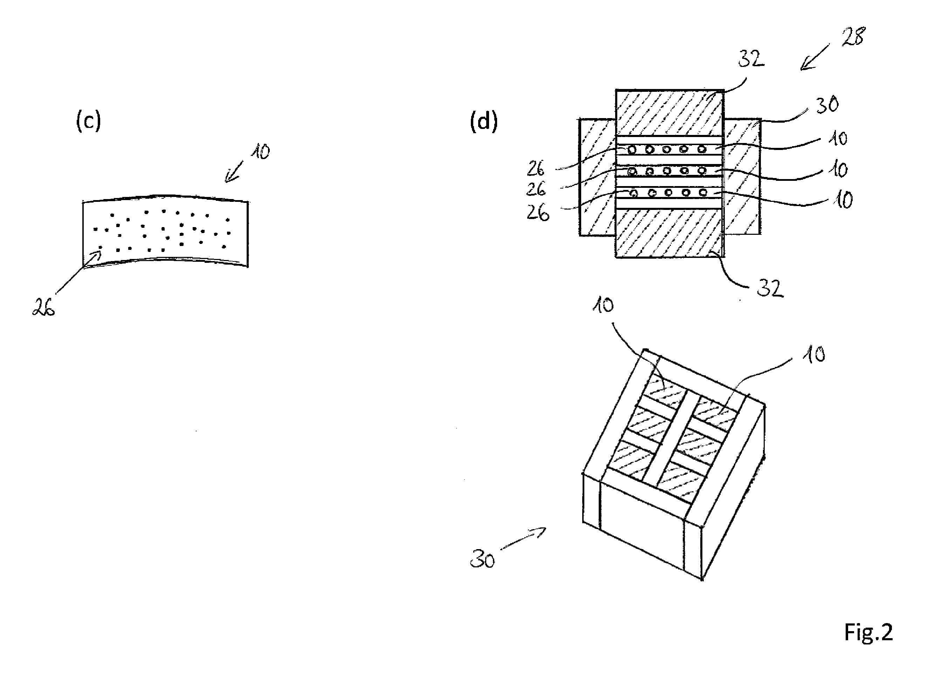

Figure 2 schematically shows further steps of the method for producing a segment for a diamond tool. In step (c) artificial diamonds 26 have been spread on the solid element or solid element board 10. In particularly, one side, for example the top side of the solid element or the solid element board 10, is covered with artificial diamonds 26. Some of the diamonds 26 are positioned in the holes or recesses 16. The abundant diamonds 26 not being positioned in holes or recesses 16 can be swept away and used for covering a next solid element or solid element board (not shown).

To keep the diamonds positioned in the holes or recesses 16 of the solid element or solid element 10 a cold pressing machine can be used to embed the diamonds firmly in the recesses or holes 16 of the solid element or solid element board 10 (not shown). This contributes to a consistent arrangement of the artificial diamonds, thereby securing a constant quality of the solid elements and the segment to be built.

In step (d) a hot pressing machine 28 is shown. The solid elements or solid element boards 10 with artificial diamonds 26 positioned thereon or therein are stacked on each other and assembled into a mould 30, particularly a graphite mould. The number of the solid elements or solid element boards 10 with positioned diamonds 26 depends on the desired thickness of the segment to be produced. In this embodiment, three solid elements 10 are stacked on each other.

For hot pressing more than one set of stacked solid elements or solid element boards 10 the mould 30 can have more than one slot for stacked solid elements, for example six slots for stacking solid elements as shown in the present embodiment.

After the solid elements 10 are positioned in the mould 30 squeeze heads 32 of the hot pressing machine act on the solid elements 10 positioned in the mould 30 thereby exerting pressure and heat. The pressure and temperature conditions depend on the material used for the solid elements or solid elements boards 10.

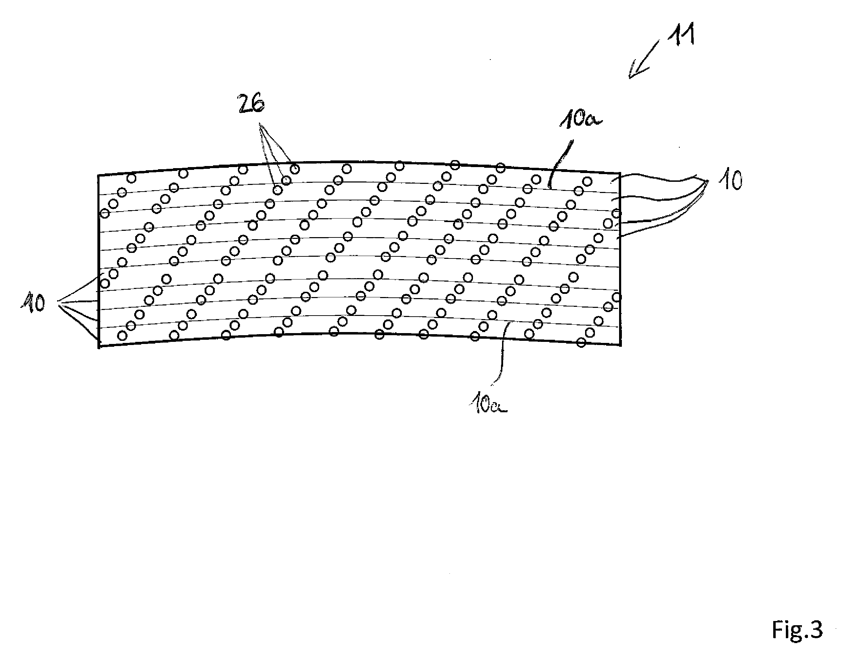

Figure 3 shows a schematic view of a finished diamond segment 11 with embedded artificial diamonds 26. Depending on the purpose and on the tool on which the segment 11 will be used, the diamonds 26 can have different positions over the thickness of the segment 11. In such a case, the solid element or solid element boards 10 can have a gradual shift of the artificial diamond position. As indicated by lines 10a which represent a border between the individual solid elements or solid element boards 10 the segment 11 according to the present embodiment exists of nine solid elements or solid element boards 10.

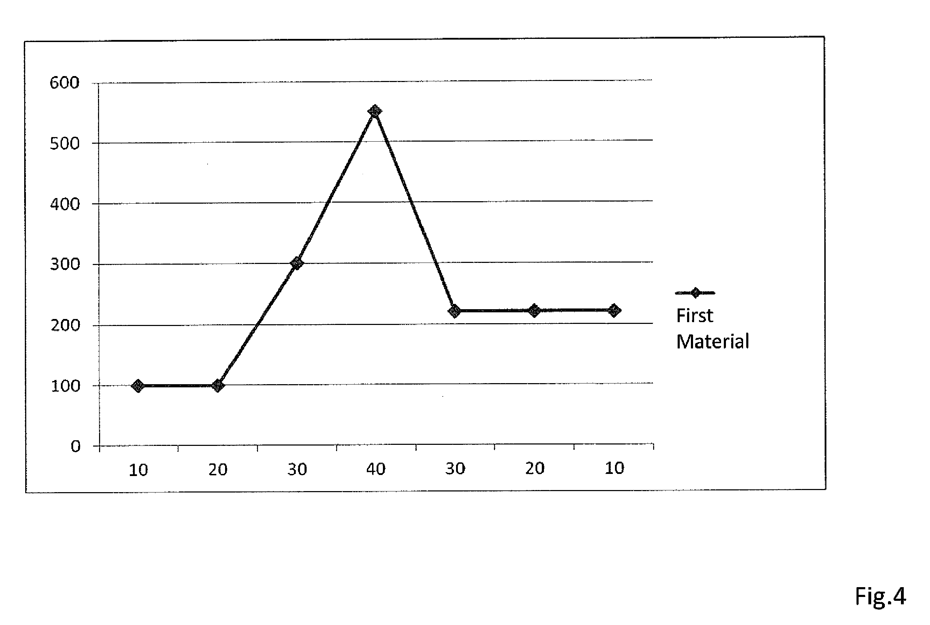

Figure 4 shows the process parameters for hot pressing stacked solid elements with the solid elements being from a first material, for example copper. The vertical axis shows temperature values in degree Celsius. The horizontal axis is showing the pressing pressure in kiloNewton (kN). The time is one minute per grid or dot, so that the time difference between two dots is one minute. The minimum temperature is 100°C and minimum pressing pressure is 10 kN. The maximum temperature is 550°C reached after three minutes of processing time. The maximum pressure is 40 kN. The time for processing stacked solid elements from this first material, for example copper, is six minutes.

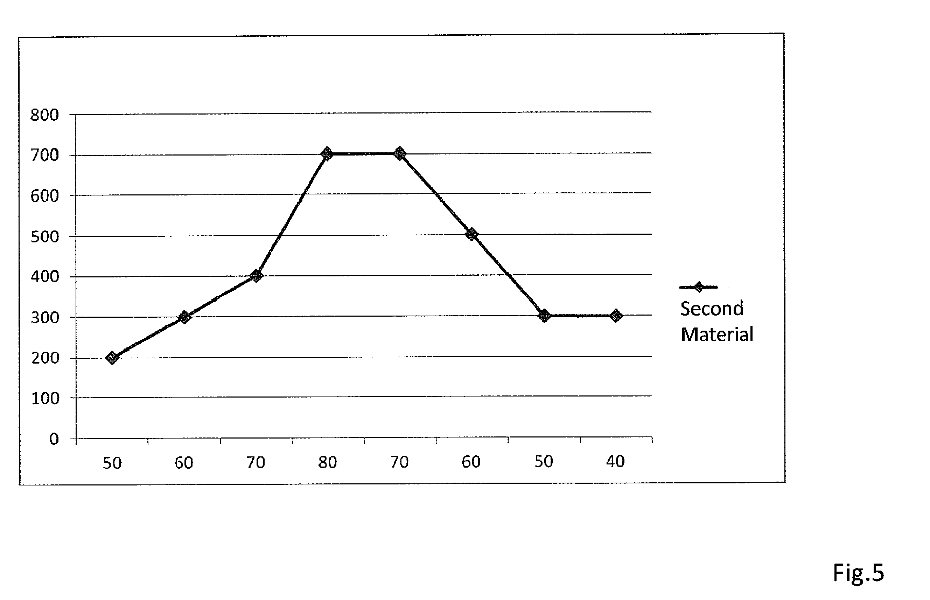

Figure 5 shows the processing parameters for hot pressing stacked solid elements with the solid elements being from a second material, for example nickel. The vertical axis shows temperatures values in degree Celsius. The horizontal axis shows pressing pressures in kiloNewton (kN). The time is one minute per grid or dot, so that the time difference between two dots is one minute. The minimum pressure at the beginning of the processing is 50 kN. The minimum temperature at the beginning of the processing is 200°C. The maximum temperature is 700°C reached after three minutes of processing. The minimum temperature at the end of the processing is 300°C. The minimum pressing pressure at the end of the processing is 40 kN. The processing time for stacked solid elements or solid element boards being from second material, for example from nickel, is seven minutes.

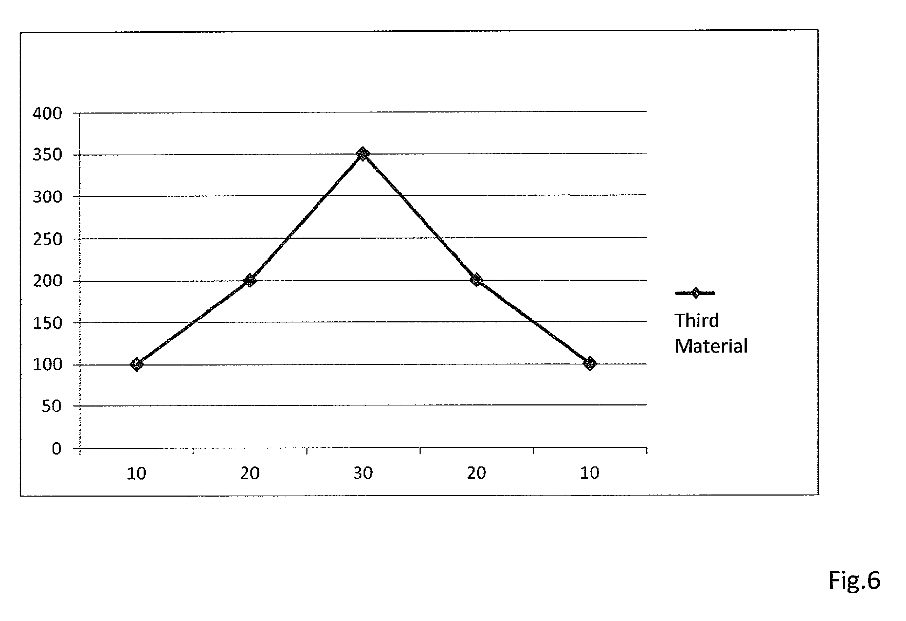

Figure 6 shows the processing parameters for hot pressing stacked solid elements with the solid elements being from a third material, for example aluminium. The vertical axis shows temperature values in degree Celsius. The horizontal axis shows pressing pressures in kiloNewton (kN). The time is one minute per grid or dot, so that the time difference between two points is one minute. The minimum temperature at the beginning of the proceedings is 100°C. The minimum pressing pressure at the beginning of the processing is 10 kN. The maximum temperature during the processing reached after two minutes is 350°C. The maximum pressing pressure is 30 kN. The minimum temperature at the end of the proceedings is 100°C. The minimum pressure at the end of the proceedings is 10 kN. The total processing time for stacked solid elements or solid element boards being from a third material, for example aluminium, is four minutes.

## Claims

1. Method for producing a segment (11) for a diamond tool comprising the following steps:
providing at least two solid elements (10),
putting artificial diamonds (26) onto a surface of each of the at least two solid elements (10),
assembling the solid elements (10) into a mould (30) with the solid elements (10) being stacked on each other and
using a hot pressing machine (28) to hot press the solid elements (10) in order to form one diamond segment (11).

2. Method according to claim 1, **characterized in that** the solid elements (10) are cut from at least one block of solid material into an individual solid element (10).

3. Method according to claim 1 or 2, **characterized in that** the solid elements (10) have a board-like or prismatic shape.

4. Method according to one of the preceding claims, **characterized in that** the solid elements (10) and/or the blocks of solid material consist of copper, aluminium, nickel or steel.

5. Method according to one of the preceding claims, **characterized in that** holes (16) or recesses (16) for holding the diamonds (26) are being formed on the solid elements (10), particularly before putting artificial diamonds (26) thereon.

6. Method according to claim 5, **characterized in that** the holes (16) or recesses (16) are being formed by a punching machine (18) having a first member (20) for carrying at least one solid element (10) and a second member (22) comprising punches (24) for forming the holes (16) or recesses (16) on the solid element (10).

7. Method according to claim 5 or 6, **characterized by** sweeping away the diamonds (26) not positioned in the holes (16) or recesses (16) of the solid elements (10).

8. Method according to one of claims 5 to 7, **characterized by** using a cold pressing machine to embed diamonds (26) firmly in the recesses (16) or holes (16) of the solid element (10), particularly before assembling the solid elements (10) into the mould (30).

9. Segment (11) for a diamond tool made from at least two solid elements (10) and artificial diamonds (26) embedded therein, wherein the solid elements (10) act as a bond for the embedded diamonds (26).

10. Segment (11) according to claim 9, **characterized in that** the solid elements (10) have a board-like or prismatic shape.

11. Segment according to claim 9 or 10, **characterized in that** the solid elements (10) consist of copper, aluminium, nickel or steel.

12. Segment according to one of claims 9 to 11, **characterized in that** the solid elements (10) have a cross section of at least 5 millimetres to 5 millimetres and a thickness no more than 2 millimetres.

13. Segment according to one of claims 9 to 12, **characterized in that** the solid elements (10) together with the artificial diamonds (26) are hot pressed by using a hot pressing machine (28).
